# EUROPEAN PATENT SPECIFICATION

(11) **EP 3 038 804 B1**
(45) Date of publication and mention of the grant of the patent: **22.04.2020**
(21) Application number: 14771438.0
(22) Date of filing: 29.08.2014
(51) Int. Cl.: B29B 7/42, B29B 7/48, B29B 7/82, B29C 48/03, B29C 48/25, B29C 48/68, B29C 48/92

(54) **THERMALLY INSULATED MELT PROCESSOR, AND RELATED PROCESS FOR MELT PROCESSING A POLYMER**
WÄRMEISOLIERTER SCHMELZEPROZESSOR SOWIE DARAUF BEZOGENES VERFAHREN ZUR SCHMELZEBEHANDLUNG EINES POLYMERS
PROCESSEUR DE FUSION ISOLÉ THERMIQUEMENT, ET PROCÉDÉ ASSOCIÉ DE TRAITEMENT EN FUSION D'UN POLYMÈRE

(30) Priority: 29.08.2013 US 201361871685 P
(43) Date of publication of application: 06.07.2016
(73) Proprietor: SABIC Global Technologies B.V., 4612 PX Bergen op Zoom (NL)
(72) Inventor: WASSMER, Kevin Scott, Mount Vernon, Indiana 47620-9367 (US); EHRENSBECK, Franklin, Mount Vernon, Indiana 47620-9367 (US); ALLEN, Thad William, Mount Vernon, Indiana 47620-9367 (US); WALLACE, Stephen Michael, Mount Vernon, Indiana 47620-9367 (US); ABELL, Thomas Usher, Mount Vernon, Indiana 47620-9367 (US); HAGEDORN, Gerald, Mount Vernon, Indiana 47620-9367 (US)
(74) Representative: Modiano, Micaela Nadia
(86) International application number: PCT/US2014/053348
(87) International publication number: WO 2015/031720

(56) References cited:
- EP-A1- 2 127 786
- EP-A2- 0 122 887
- EP-A2- 1 813 414
- WO-A2-01/32396
- GB-A- 2 278 262
- US-A1- 2008 136 066
- US-A1- 2010 110 823
- US-A1- 2012 090 819
- ROBERT SIKORA: "Semiconductor heaters stimulate new approach to plasticating systems", PLASTICS ENGINEERING,, vol. 39, no. 12, 1 December 1983 (1983-12-01), pages 35-38, XP001353588,

## Description

### BACKGROUND

Extrusion of polymer materials under heat requires significant power due to inefficient thermal transfer into an extruder. The inefficiency is partly due to inefficient thermal contact between external metallic heaters and the extruder. For example, US 2008/136066 A1 includes a thermal insulation material interposed between a heater and an extruder. WO 01/32396 A2 includes a ceramic insulated band having heating and cooling elements and US 2012/090819 A1 includes a heater-cooler system for the barrel of an extruder. GB 2,278,262 A includes a layer of thermally insulating material disposed over an electrical heating element. Moreover, heat is radiated into an area surrounding the extruder instead of being transmitted into the body of the extruder, creating a thermal loss to the surrounding area which increases the temperature of the area. This area therefore requires increased power expenditures due to active cooling of the area such as by forced air or cooled air convection around the extruder. Further, exposed heaters operating at a temperature sufficient to drive the thermal load of the extruder and its polymeric contents are typically at a temperature in excess of the skin tissue damage threshold, which is around 52°C. To avoid direct skin contact with such heaters, a metallic cover is placed over the extruder and heater. The metallic cover is spaced apart from the heater; however, the metallic cover is heated by infrared radiation emitted from the heater such that the cover also attains a quite high temperature during extrusion.

Additionally, since the heater has inhomogeneous thermal contact with the extruder, a thermal hot spot occurs, and certain components of the extruder are subject to thermal damage. Moreover, the extruded polymer product may suffer from unwanted chemical or physical property variation due to the hot spot.

Improved heating and materials for controlling an extrusion process are always welcomed in the art.

### BRIEF DESCRIPTION

The above described and other features are exemplified by the following figures and detailed description.

Disclosed is a thermally insulated melt processor according to claim 1 comprising: a barrel comprising barrel sections; and a heater in direct contact with disposed on the barrel such that a gap is absent between the heater and the barrel, wherein the heater comprises: an insulating material in contact with a surface of the barrel and wherein the insulating material around each barrel section comprises a single piece of insulation surrounding joined with itself at only one point; and characterized in that a heat member is disposed in the insulating material and configured to provide heat in response conduction of electric current through the heat member, wherein heat member comprises a wire heating element wherein the wire heating element has a diameter of 0.5 to 4.0 mm, and when installed on barrel, the wire heating element is less than or equal to 10 mm from a surface of the barrel and wherein the wire heating element is shaped into a flat coil, wherein the flat coil is a sinusoidal wave shaped, and wherein the amplitude of sinusoidal wave is at least 10 times a diameter of the wire heating element.

Additionally disclosed is a system according to claim 9 for melt processing a polymer, the system essentially comprising: the thermally insulated melt processor; and a controller electrically connected to the heat member.

Further disclosed is a process according to claim 10 for reducing power consumption during melt processing a polymer.

### BRIEF DESCRIPTION OF THE DRAWINGS

Referring now to the figures, wherein like elements are numbered alike:
FIG. 1 shows a side view of a barrel of a melt processor;
FIG. 2 shows a side view of a barrel of a melt processor;
FIG. 3 shows a cross-section of a thermally insulated melt processor;
FIG. 4 shows a transverse cross-section of a heater;
FIG. 5 shows a longitudinal cross-section of the heater shown in FIG. 3;
FIG. 6 shows a transverse cross-section of a heater;
FIGS. 7 and 8 show a perspective view of a heater for a melt processor;
FIG. 9 shows a perspective view of heaters and a flange cover;
FIGS. 10 and 11 show a perspective of flange covers;
FIG. 12 is block diagram of a system for melt processing;
FIG. 13 is a thermal photograph of a thermally insulated melt processor;
FIG. 14 is an enlarged view of a portion of the thermal photograph of the thermally insulated melt processor shown in FIG. 13;
FIG. 15 is a thermal photograph of a melt filter portion of a thermally insulated melt processor; and
FIG. 16 is a thermal photograph of metallic heater disposed on a barrel of a melt processor.

### DETAILED DESCRIPTION

It has been found that a thermally insulated melt processor has beneficial properties. A heater that establishes an appreciable temperature differential between an underlying barrel of a melt processor and an exterior of the surface, resulting in reduced cooling requirements and overall operating expenses for melt processing polymers. Additionally, hot spots are absent, with uniform temperatures being produced along the barrel. Moreover, power consumption is greatly reduced compared to a metallic heater. Furthermore, the heater herein is flexible, lightweight, and easily configurable to various barrel shapes.

According to an example, a thermally insulated melt processor includes a barrel and a heater disposed on the barrel. The heater includes an insulating material in contact with a surface of the barrel and a heat member disposed in the insulating material and configured to provide heat in response conduction of electric current through the heat member.

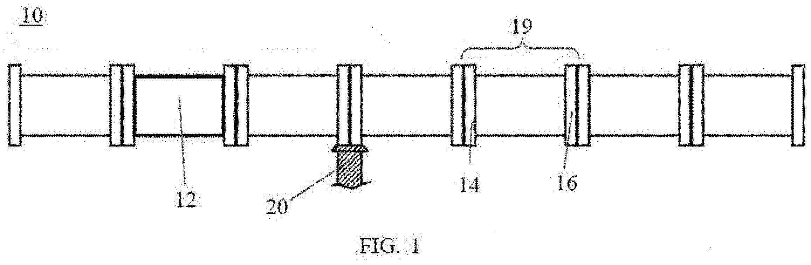

As shown in FIG. 1, a barrel 10 of a melt processor includes repeated nipple sections 19. Each nipple 19 has a tube 12 interposed between a first flange 14 and a second flange 16, which make up a pair of flanges 18. In some melt processors, instead of the repeated nipples 19, the barrel includes a single tube 12 with or without flanges (14, 16). The flanges 14, 16 can be attached to the tube 12, e.g., by a weld so that they are physically attached to the tube 12. The nipples 19 can be connected to one another so that flanges of adjacent nipples 19 contact. A fastener, e.g., a bolt and nut, can apply a force across abutting flanges of adjacent nipples 19 so that the barrel 10 can be a continuous body. A prop 20 can suspend the barrel 10 above a floor and adjust a vertical height of the barrel 10 to contact other equipment, such as a polymer feed source, melt filter, dye, and the like. For further illustration, a side view of a barrel 10 of a melt processor is shown in FIG. 2. Here, a length of the barrel is indicated as "L" in FIG. 2.

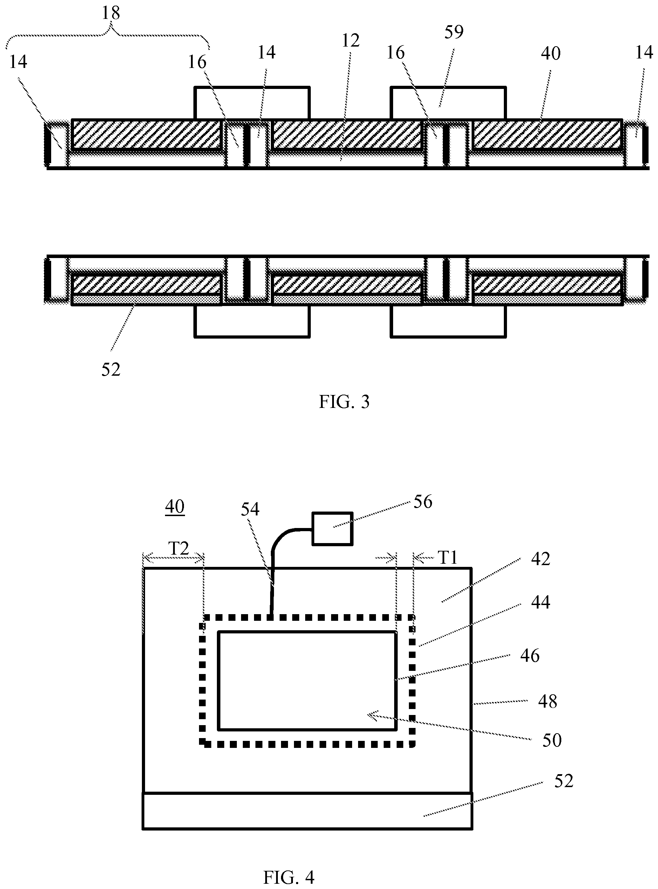

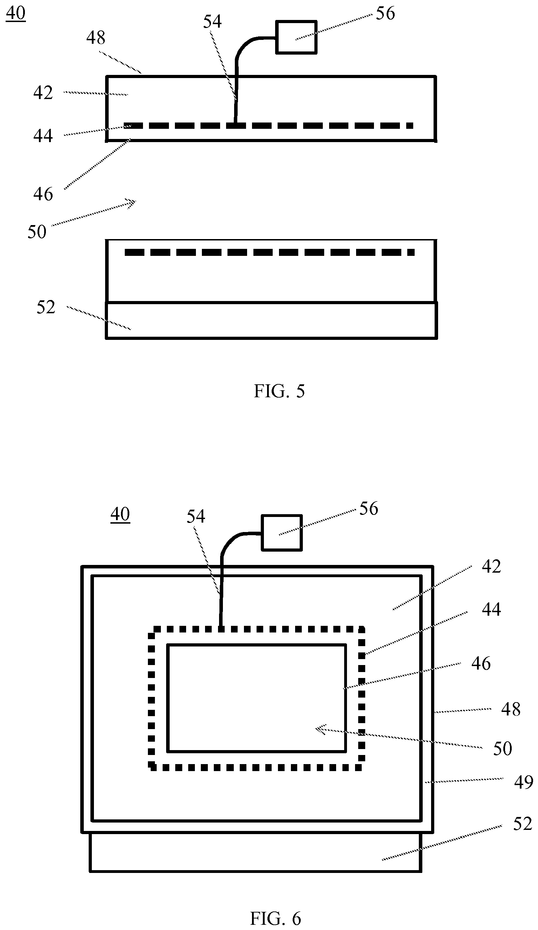

In an example, as shown in FIG. 3, a thermally insulated melt processor has a heater 40 disposed on a tube 12 between a pair of flanges 18. A flange cover can be disposed on an abutting flanges 14, 16 with a support 52 disposed on an exterior surface of the heater 40 to provide support of the heater 40 on the tube 12. FIGS. 4 and 5 show further details of the heater 40 in transverse and longitudinal cross-sections, respectively. In the heater 40, a heat member 44 is disposed in an insulating material 42. The heater 40 has an inner surface 46 surrounding a hollow space 50 through which the barrel of the melt processor is inserted. An exterior surface 48 is the outer boundary of the insulating material 42. The support 52 can be disposed on the exterior surface 48 of the insulating material 42 opposing the barrel 10. The support prevents a gap between the heater 40 and the barrel 10. An electrical lead 54 can be electrically connected to the heat member 44, and an electrical connector 56 can be arranged at a terminus of the electrical lead 54. The electrical connecter 56 can connect to an external power cable to transmit electrical power to the heat member 44 via the electrical lead 54.

The heat member 44 is disposed in the insulating material 42 such that the insulating material 42 has a first thickness T1 between the heat member 44 and the inner surface 46 of the heater. Likewise, a thickness T2 can be present between the heat member 44 and the exterior surface 48 of the heater 40. The thickness T1 can be greater than, less than, or equal to the thickness T2. In an example, the thickness T1 is less than the thickness T2. In this arrangement, the heat member 44 is relatively closer to the inner surface 46 and further away from the exterior surface 48 of the heater 40. As a result, during operation when the heat member 44 radiates heat, the inner surface 46 of the heater 44 can be hotter than the exterior surface 48. The ratio of the thickness T1 to thickness T2 can be, e.g., from 2:1 to 1:100, specifically from 1:1 to 1:10, and more specifically from 1:2 to 1:4.

In some exemplary heaters, the heater 40 includes an exterior layer 49 disposed on the insulating material 42 as shown in FIG. 6. The exterior layer 49 can be disposed on the entirety of the outer surface of the insulating material 42 such that the exterior surface 48 of the heater 44 is completely the exterior layer 49. Alternatively, only a portion of the outer surface of the insulating material 42 can be covered with the exterior layer 49 such that the exterior surface 48 includes a portion that is the exterior layer 49 and a portion that is the insulating material 42.

The shape of the barrel of the melt processor is useful for determining the shape of inner surface of the heater. Beneficially, the heater herein is flexible and conforms to the shape of the barrel. Therefore, regardless of the shape of the barrel, the heater thermal can contact the tube of the barrel with an absence of a gap between the inner surface of the heater and the tube. Although the barrel of the melt processor is shown as rectangular, exemplary cross-sectional shapes of the barrel can include round, elliptical, square, rectangular, polygonal, and the like. According to an example, the shape of the heater can be selected to correspond to the shape of the barrel to optimize the thermal contact between the heater and the barrel.

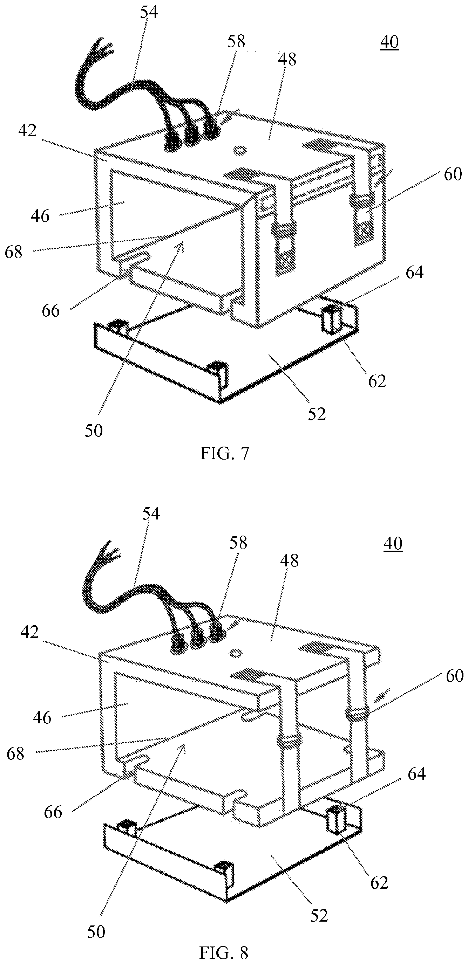

FIGS. 7 and 8 show examples of the heater. Here, in addition to the aforementioned features, the heater can include, e.g., a grommet 58 in which the electrical lead 54 is disposed to relieve bending stress on the electrical lead 54. Also, the grommet 58 can mechanically stabilize the electrical lead 54 relative to the exterior surface 48 of the heater 40 so that the electrical lead 54 is not easily removed from heater 40 or electrically disconnected from heat member (not shown) inside the heater 40 if the electrical lead 54 is subjected to a pulling force such as or being yanked or pulled. The heater 40 shown in FIG. 7 has rectangular cross-section with four sides. A fastener 60 can be disposed on the exterior surface 48 in order to snuggly fit the heater 40 over the barrel. It is contemplated that abutting walls of the heater 40 can meet and adjoin at a corner 68. In some configurations, the walls are a continuous piece so that there is no discontinuity along the inner surface 46 or the exterior surface 48. In an exemplary heater, a wall can be discontinuous with another wall so that the corner 68 is made by contacting the two walls together. According to an embodiment, as shown in FIG. 8, a portion such as a wall of the heater 40 is absent so that the heater has an open structure as opposed to the enclosed structure shown in FIG. 7.

With regard to the fastener 60, the fastener 60 can be, e.g., a belt, a band, and the like, that supplies a compressive force to the heater in order to join the walls of the heater 40, maintain the position of the heater 40 on a barrel, prevent a gap between the inner surface 46 of the heater 40 and the barrel, increase thermal contact between the heater 40 and the barrel, and the like. The fastener 60 can be disposed completely or partially (as in FIGS. 7 and 8) on a perimeter of the heater 40. In some exemplary heaters, the heater 40 does not include the fastener 60. The fastener 60 includes, e.g., a buckle to cinch and tighten the fastener 60 on the heater. Exemplary fasteners 60 include straps with a D-ring or other buckle or clasp, hook and lacing material, flaps, eyelets, fabric ties, and the like. Such fasteners 60 retain the heater 40 in position on the barrel without coming undone but are easily manipulated to be undone by, e.g., an operator. In this manner, the heater 40 can be easily and quickly removable from the barrel.

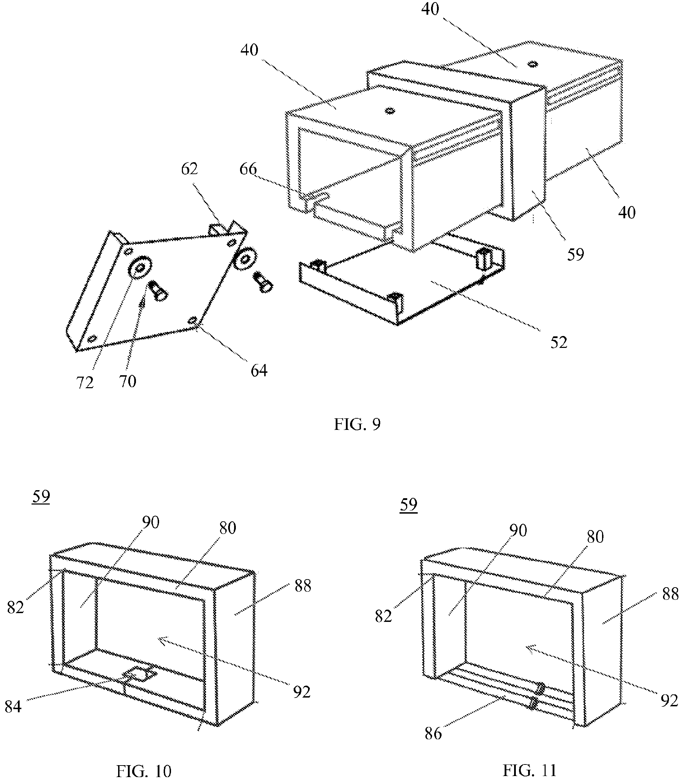

To aid in the structural integrity and to avoid formation of a gap between the heater 40 and barrel of the melt processor, the support 52 can be disposed on the heater. As shown in FIGS. 7, 8, and 9, the support 52 can be disposed on a side of the exterior surface 48 and includes an attachment guide 62 that has an attachment hole 64 for insertion of, e.g., a fastener 70 such as a bolt or a screw that engages with an optional washer 72, per FIG. 9. The attachment hole 64 can be a through hole that is tapped or not tapped. The attachment guide 62 is coupled into a keyway 66 located in the heater 40. The keyway 66 captures the attachment guide 62 so that support 52 does not inadvertently slip off of the heater 40. Alternatively, the keyway 66 is oversized with respect to the size of the attachment guide 62 such that support 52 easily detaches from the heater 40. Thus, the support 52 can be detachable from the heater 40 or can be permanently attached to the heater. In some melt processors, the barrel of the melt processor includes an attachment coupling that accepts the fastener 70 from the support 52 to attach the support fixedly to the barrel. The attachment coupling is, e.g., a tapped hole, a collet, hole into which the fastener 70 is press fit, and the like. The attachment coupling on the barrel may not penetrate into the core of the barrel where melt processing occurs.

The support 52 can be integrally disposed in the insulating material 42 of the heater 40. It is contemplated that here none or a portion of the support 52 is exposed to the external environment without being covered by the insulating material 42.

FIG. 9 also illustrates an assembly of two heaters 40 and a flange cover 59. The heaters 40 contact or do not contact each other inside the flange cover 59. The flange cover completely or partially surrounds the perimeter of the heater 40. Referring again to FIG. 3, it should be appreciated that flanges 14, 16 can separate adjacent heaters 40 within the flange cover 59. According to an example, more than one heater 40 is disposed on a single tube, and a flange cover optionally is disposed at on the junction where adjacent heaters 40 abut one another. In an example, the flange cover overlaps the heater. Here, the amount of overlap is selected, e.g., to optimize operating conditions of the melt processor, heating efficiency of the heater, accessing ease of the melt process or heater, or the like. In some configurations, the flange cover does not overlap the heater.

Embodiments of the flange cover 59 are shown in FIGS. 10 and 11. The flange cover includes insulating material 80, which is the same or different than the insulating material included in the heater. The flange cover 59 of FIG. 10 also includes a through hole 84 through which a tool (e.g., a diagnostic tool such as thermocouple, feeler gauge, pyrometer, wrench, and the like) is inserted. Such tool then interacts with the flange on which the flange cover is disposed. An optional corner is included in the flange cover 59 for certain flange cover shapes. The exterior surface 88 opposes the interior surface 90 that forms and surrounds a hollow core 92 in the flange cover 59. The flange cover 59 also can include a fastener 86. A portion of the flange cover 59 can be absent so that the flange cover has an open configuration as in FIG. 11 compared to the enclosed configuration shown in FIG. 10.

Additionally, the flange cover can include a secondary heat member disposed in the insulating material and is configured to heat the flange. In some circumstances, the secondary heat member is absent from the flange cover.

A sensor can be applied to the thermally insulated melt processor. Exemplary sensors include a temperature sensor, a pressure sensor, a moisture sensor, a fatigue sensor, an accelerometer, and the like. A temperature sensor can be disposed on the barrel to sense a temperature of the barrel.

The insulating material is thermally insulating and can have a melting temperature or a thermal decomposition temperature greater than a temperature effective to perform melt processing of a polymer in the melt processor. According to an example, the insulating material has a melting temperature greater than or equal to 600°C, and more specifically greater than 500°C. The insulating material can be fibers (short or continuous) or strands. Exemplary insulating materials include glass, ceramic, high temperature polymers, and the like, such as silica, fiberglass, and the like. The insulating material can have less than or equal to 1,000 parts per million by weight (ppm), specifically, less than 500 ppm, of boron. The insulating material can have less than or equal to 10 ppm of various materials such as asbestos, lead, mercury, cadmium, and arsenic. The insulating material can be free of these materials (e.g., no measurable amount as determined with measurement standards as of the filing date of this application).

The insulating material can be fire retardant or fire suppressive. According to an example, the insulating material is electrically insulating. For a heater with an exterior layer, the exterior layer and the insulating material can be the same or different material. The exterior layer provides water or chemical resistance to the heater. The thickness of the insulating material is not limited but is greater than 1.27 millimeters (0.5 inch) or thicker, e.g., from 2.54 to 50.8 millimeters (1" to 20") thick, specifically from 2.54 to 12.7 millimeters (1" to 5") thick.

With regard to the heat member, the heat member can be a bare wire or insulated with a high temperature coating. The heat member is a resistive element that provides heat to the heater and barrel through Joule heating. The heat member can be heated to greater than 700°C, specifically greater than 600°C, and more specifically greater than 350°C. It is contemplated that the wire is not susceptible to oxidation degradation during thermal cycling, cooling, heating, or temperature soaking. The heat member can be any number of forms, including ribbon, tape, wire, and the like with a cross-sectional shape that can be round, oval, square, rectangular, and the like. Such heat member can be straight or coiled. Resistive metals for construction of the heat member include Ni, Cr, Al, Fe Cu, an alloy thereof, and the like. Exemplary heat members are Nichrome, Kanthal, Cupronickel, and the like. Moreover, the heat member remains flexible even after attaining high temperatures and is readily bendable so that the heater conforms to the shape of the barrel. The heat member also connects to the electrical lead, which can be an electrically conductive metal although it may be the same or different resistive metal material as the heat member.

The heater also can include the support. The support can be made of metal, ceramic, polymer, or a combination comprising at least one of the foregoing. This material can have a high thermal degradation that is compatible with the temperature of the exterior surface of the heater. In an embodiment, the support is aluminum. The shape of the support is not limited and can be selected to achieve a high degree of thermal contact between the heater and the barrel of the melt processor.

The thermally insulated melt processor has a number of advantages and benefits. The heater can establish an appreciable temperature differential between the barrel and the exterior surface of the heater. The difference in a temperature at the surface of the barrel and a temperature at an exterior surface of the heater can be greater than or equal to 500°C, specifically greater than or equal to 400°C, and more specifically greater than or equal to 300°C. In an example, the exterior surface of the heater is less than 65°C, specifically less than 40°C and more specifically less than 35°C, and the interior of the barrel is from 190°C to 450°C. According to an example, the temperature of the exterior surface of the heater is less than or equal to 130°C when the barrel has a temperature effective to melt process a polymer comprising a polyolefin, a polycarbonate, or a combination comprising at least one of the foregoing polymers. Due to the temperature differential across the heater, operating the thermally insulated melt processor herein has reduced cooling requirements and overall operating expenses for melt processing polymers.

Additionally, due to the high degree of thermal contact between flexible and conformable heater and the barrel, hot spots are absent or substantially absent so that a uniform temperature is produced along the barrel. Further, the quality of the product polymer is enhanced over other melt processing devices operating without the heater since the temperature of the barrel is more readily controlled by the heater. Since the heater contains the insulating material, the heater also insulates the barrel from heat losses. Heat can be generated inside the barrel, e.g., when a polymer is engaged by a screw member disposed in the barrel. However, this heat can be insulated from flowing to the surrounding environment due to the presence of the heater on the barrel of the melt processor. Thus, power consumption is greatly reduced compared to, e.g., a metallic heater.

The heater herein also can be lightweight, and easily configurable to various barrel shapes. In an example, the heater can have a weight less than or equal to 22.7 kilograms (50 pounds), specifically 13.6 kilograms (30 pounds), more specifically less than or equal 9.07 kilograms (20 pounds), yet more specifically less than or equal to 4.53 kilograms (10 pounds), and even more specifically less than or equal to 2.27 kilograms (5 pounds).

The thermally insulated melt processor comprises a barrel that includes a plurality of barrel sections, and each barrel section can have a tube interposed between a pair of flanges that are welded to the tube. A plurality of heaters can be disposed on the barrel such that a heater is disposed on the tube between the pair of flanges of each barrel section, and a flange cover can be disposed on the flanges of adjacent barrel sections. The heater can be configured to produce a temperature gradient along the length (e.g., along "L" as indicated in FIG. 2) of the thermally insulated melt processor. In some configurations, the heater can be configured to produce an isothermal temperature along a length of the thermally insulated melt processor. The barrel further can include a bore tube with a bore disposed in the bore tube and that extends along a length of the bore tube. A screw member can be disposed in the bore tube and configured to apply a force to a polymer disposed in the bore tube.

According to an example, the plurality of heaters can be controlled to reach the same or different temperature. They can be wired to be controlled independently or wired together in parallel or series. Therefore, a single temperature or zones of temperatures can be created along the length of the barrel.

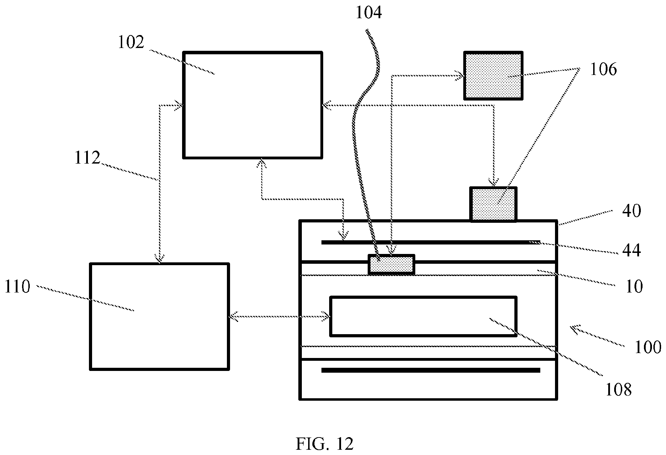

A system for melt processing a polymer includes the thermally insulated melt processor 102 of FIG. 12 and a controller electrically connected to the heat member of the heater. That is, as show in FIG. 12, the system has controller 102 electrically connected to the heat member 44 inside the heater 40, which is disposed on the barrel 10. A temperature sensor 104 is disposed on the barrel 10. The system optionally includes a secondary 26. The controller can be electrically connected to a secondary temperature sensor 106, which is configured to sense a temperature of an external surface of the heater 40. The temperature sensor 104 and the secondary temperature sensor 106 independently can be a thermocouple, an RTD, a thermistor, an infrared camera, an infrared card, a pyrometer, and the like.

A screw member 108 disposed in the barrel 10 can be connected to a drive unit 110. The screw member 108 also can be configured to apply a force to a polymer that is subjected to melt processing in the barrel. The drive unit 110 can be configured to rotate the screw member 108. Electrical communication lines 112 can electrically connect the controller 102 to the temperature sensor 104, secondary temperature sensor 106, heat member 44, and drive unit 110. The drive unit 110 can be mechanically or electrically connected to the screw member 108. The communication lines 112 can be configured for one-way or two-way communication among the connected components.

According to an exemplary system, the controller 102 can be configured to supply current to the heat member 44. Here, the controller 102 can be configured to heat the heat member 44 to a selected temperature for melt processing the amount of power being based on the temperature of the barrel 10, which is derived from the temperature sensor 104. The controller also can provide commands to the drive unit 110 for driving the screw member.

In some systems, the screw member is a single screw. In a system, the screw member is twin screws, which co-rotate. A diameter of the screw can be from 10 mm to 300 mm.

The heater thermally insulates the melt processor and experiences very low heat losses from the heat member to the exterior surface of the heater while providing highly efficient heat transfer from the heat member to the barrel of the melt processor in part due to the large thermal contact between the heater and the barrel. Further, heat is not lost at the flanges to the environment since the flange cover is disposed on the flange. As such, the thermally insulated melt processor provided with the heater herein reduces energy consumption compared to an arrangement without using the heater herein.

Thus, a process for reducing power consumption during melt processing a polymer includes disposing a polymer in the thermally insulated melt processor that has a screw member disposed in the barrel. The process also includes passing an electrical current through the heat member to heat the barrel, applying a force to the polymer by rotating the screw member, and melting the polymer. An efficiency of heating the barrel from the electrical current passed through the heat member can be greater than or equal to 85%, specifically greater than or equal to 75%, and more specifically greater than or equal to 65%, based on the amount of electrical current through the heat member required to reach a temperature effective to melt the polymer. In an example, a temperature of an exterior surface of the heater can be less than or equal to 130°C when the barrel has a temperature effective to melt the polymer, e.g., a polyolefin, a polycarbonate, or a combination comprising at least one of the foregoing polymers.

The thermally insulated melt processor can include other components. In some configurations, the process can include passing the polymer through a melt filter, a die, and other extruder components disposed in a chamber connected to the barrel.

The thermally insulated melt processor is further illustrated by the following examples.

### Example 1: Thermally Insulated Melt Processor.

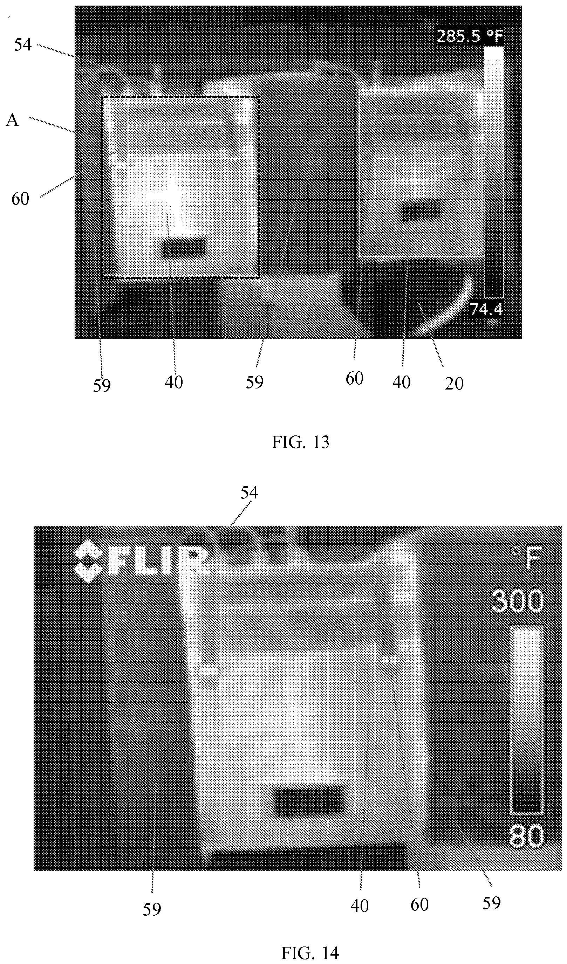

A melt processor was outfitted with a heater as described above. The melt processor had a barrel with a 273.0 mm × 412.8 mm rectangular cross-section and was 3570 mm in length. A 133 mm twin screw mechanism was inside the barrel. The heater was heated so that the barrel attained a temperature of 287.8 °C and was held at that temperature for >24 hours. A polycarbonate polymer was introduced into the barrel, and the twin screw was rotated to melt and move the polymer down a length of the barrel. As show in FIG. 13, although the temperature of the barrel was 287.8°C, the exterior surface of the heater was about 120°C. This exterior temperature was lowered to 55°C with removal of a shroud (not shown in FIG. 13) that previously surrounded the heater immediately before acquiring the thermal photograph shown in FIG. 13. An enlarged view of the area marked by "A" in FIG. 13 is shown in FIG. 14.

### Example 2: Thermally Insulated Melt Filter Assembly.

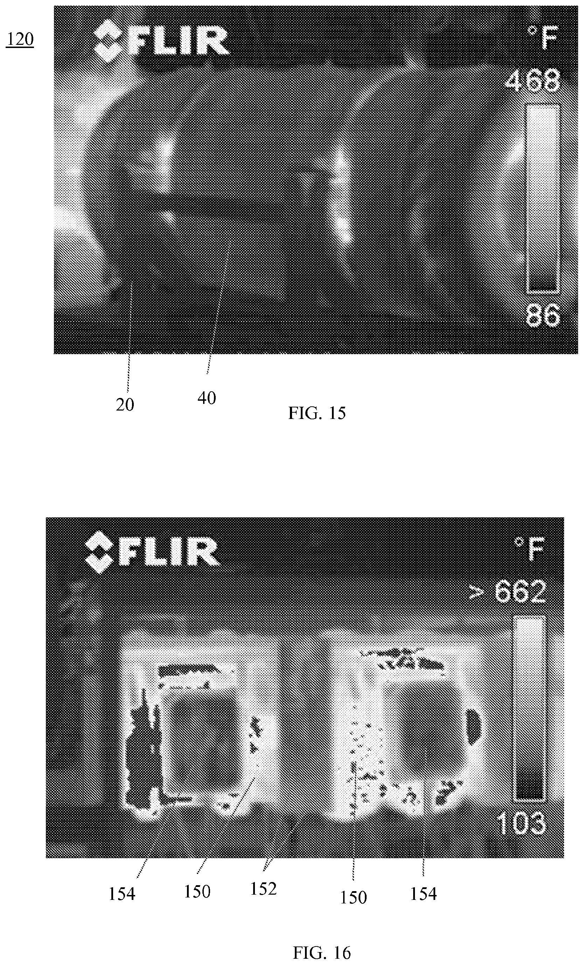

A melt filter assembly was outfitted with a heater as described above. The melt filter chamber had a round cross- section with a diameter from 381 mm to 762 mm and length of 406 mm to 1016 mm. The melt filter inside the assembly included a series of disks or candle filtration elements. The heater was heated so that the chamber attained a temperature of 310°C and was held at that temperature for >24 hours. The melt processed polymer from Example 1 was introduced into the assembly filtered. As show in FIG. 15, although the temperature of the chamber was 390°C, the exterior surface of the heater was about 46°C.

### Comparative Example: Metal Band Heater.

A melt processor was outfitted with a metal band heater that wrapped around the barrel of the melt processor. The melt processor had a barrel with a 273.0 mm × 412.8 mm rectangular cross-section and was 3570 mm in length. A 133 mm twin screw mechanism was inside the barrel. The metal band heater was heated so that the barrel attained a temperature of 287.8°C and held at that temperature for >24 hours. A polycarbonate polymer was introduced into the barrel, and the twin screw was rotated to melt and move the polymer down a length of the barrel. As show in FIG. 17, the temperature of the exterior surface of the heater was > 350°C. Thus, exterior temperature with a metallic band heater is much greater by a factor of about 6.4 times that of the heater in Example 1.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films).

## Claims

1. A thermally insulated melt processor comprising:
a barrel (10) comprising barrel sections; and
a heater (40) in direct contact with the barrel (10) such that a gap is absent between the heater (10) and the barrel (40), wherein the heater comprises:
an insulating material (42) in contact with a surface of the barrel (10) and wherein the insulating material around each barrel section comprises a single piece of insulation surrounding joined with itself at only one point; and
**characterized in that** a heat member (44) is disposed in the insulating material (42) and configured to provide
heat in response conduction of electric current through the heat member (44),
wherein heat member (44) comprises a wire heating element wherein the wire heating element has a diameter of 0.5 to 4.0 mm, and when installed on barrel (10), the wire heating element is less than or equal to 10 mm from a surface of the barrel (10) and wherein the wire heating element is shaped into a flat coil, wherein the flat coil is a sinusoidal wave shaped, and wherein the amplitude of sinusoidal wave is at least 10 times a diameter of the wire heating element.

2. A thermally insulated melt processor of claim 1, wherein the heater (40) draws less than or equal to 6000 watts of power.

3. A thermally insulated melt processor of any of the previous claims, wherein the heater (40) further comprises an outer layer (49) forming a water barrier, wherein the outer layer (49) comprises a metal, a silicone, a thermoset resin, or a combination comprising at least one of the foregoing.

4. The thermally insulated melt processor of any of the previous claims, wherein the barrel (10) comprises a flange (14, 16) disposed at a terminus of a tube (12), wherein the heater (40) is disposed on the tube (12), and a flange cover (59) is disposed on the flange (14,16), and further comprising a flange cover (59) comprising a flange insulating material (80) that is the same or different than the insulating material (42) of the heater, and wherein the flange cover (59) further comprises a secondary heat member (44) disposed in the insulating material (80) and is configured to heat the flange (14,16).

5. The thermally insulated melt processor of any of the previous claims, wherein the barrel (10) comprises:
a plurality of a barrel sections (19), each barrel section (19) comprising:
a tube (12); and
a pair of flanges (18) separated by the tube (12) and attached at an opposing terminus of the tube (12),
wherein the barrel sections (19) are arranged such that the flanges (14,16) of adjacent barrel sections (19) are in contact with one another, and
a plurality of the heaters (40) are disposed on the barrel (10) such that a heater (40) is disposed on
the tube (12) between the pair of flanges (18) of each barrel section (19), and a flange cover (59) is disposed on the flanges (14,16) of adjacent barrel sections (19).

6. The thermally insulated melt processor of any of the previous claims, wherein
the barrel (10) comprises:
a tube (12);
a bore disposed in the tube (12) and which extends along a length of the tube (12); and
a screw member (108) disposed in the bore and configured to apply a force to a polymer.

7. The thermally insulated melt processor of any of the previous claims, wherein the heater (10) is configured to produce an isothermal temperature along a length of the thermally insulated melt processor.

8. The thermally insulated melt processor of any of the previous claims, wherein a difference in a temperature at the surface of the barrel (10) and a temperature at an exterior surface (48) of the heater (40) is greater than or equal to 300°C, and wherein a temperature of an exterior surface (48) of the heater (40) is less than or equal to 130°C when the barrel 10) has a temperature effective to melt process a polymer comprising a polyolefin, a polycarbonate, or a combination comprising at least one of the foregoing polymers.

9. A system for melt processing a polymer, the system comprising:
the thermally insulated melt processor of any of the previous claims; and
a controller (102) electrically connected to the heat member (44);
wherein the controller (102) is configured to supply current to the heat member (44), wherein the controller (102) is electrically connected to a temperature sensor (104) disposed on the barrel (10), and
wherein the controller (102) is configured to heat the heat member (44) to a selected temperature, based
on the temperature of the barrel (10), and wherein the controller (102) is electrically connected to a secondary temperature sensor (106), the secondary temperature sensor (106) is configured to sense a temperature of an external surf ace (48) of the heater (40).

10. A process for reducing power consumption during melt processing a polymer, the process comprising:
processing a polymer in the thermally insulated melt processor of any of Claims 1 - 8,
wherein the thermally insulated melt processor further comprises a screw member (108) disposed in the barrel (10);
passing an electrical current through the heat member (44) to heat the barrel (10);
applying a force to the polymer by rotating the screw member (108); and
melting the polymer,
wherein an efficiency of heating the barrel (10) from the electrical current passed through the heat member (44) is greater than or equal to 70%, based on the amount of electrical current through the heat member (44) required to reach a temperature effective to melt the polymer; and
wherein the polymer comprises a polyolefin, a polycarbonate, or a combination comprising at least one of the foregoing polymers.

## Patentansprüche

1. Ein wärmeisolierter Schmelzprozessor, der Folgendes umfasst:
einen Zylinder(ßß) (10), der Zylinderabschnitte(ßß) umfasst, und
eine Heizvorrichtung (40) in direktem Kontakt mit dem Zylinder(ßß) (10), so dass keine Lücke zwischen der Heizvorrichtung (10) und dem Zylinder(ßß) (40) vorhanden ist,
wobei die Heizvorrichtung Folgendes umfasst:
ein Isoliermaterial (42) in Kontakt mit einer Oberfläche des Zylinders(ßß) (10), wobei das Isoliermaterial um jeden Zylinderabschnitt(ßß) ein einziges umgebendes Stück Isolierung umfasst, das an nur einem Punkt mit sich selbst verbunden ist, und
**dadurch gekennzeichnet, dass** ein Heizglied (44) in dem Isoliermaterial (42) angeordnet und konfiguriert ist, um
als Reaktion auf das Leiten von elektrischem Strom durch das Heizglied (44) Wärme zu liefern,
wobei das Heizglied (44) ein Drahtheizelement umfasst, wobei das Drahtheizelement einen Durchmesser von 0,5 bis 4,0 mm hat und, wenn es auf dem Zylinder(ßß) (10) installiert ist, höchstens 10 mm von einer Oberfläche des Zylinders(ßß) (10) entfernt ist, und wobei das Drahtheizelement die Form einer Flachspule hat, wobei die Flachspule sinuswellenförmig ist und wobei die Amplitude der Sinuswelle mindestens das 10-Fache eines Durchmessers des Drahtheizelements beträgt.

2. Ein wärmeisolierter Schmelzprozessor gemäß Anspruch 1, wobei die Heizvorrichtung (40) höchstens 6000 Watt Leistung zieht.

3. Ein wärmeisolierter Schmelzprozessor gemäß einem beliebigen der obigen Ansprüche, wobei die Heizvorrichtung (40) weiter eine äußere Schicht (49) umfasst, die eine Wasserbarriere bildet, wobei die äußere Schicht (49) ein Metall, ein Silikon, einen Duroplasten oder eine Kombination umfasst, die mindestens eines der zuvor Genannten umfasst.

4. Der wärmeisolierte Schmelzprozessor gemäß einem beliebigen der obigen Ansprüche, wobei der Zylinder(ßß) (10) einen Flansch (14, 16), angeordnet an einem Ende eines Rohrs (12), umfasst, wobei die Heizvorrichtung (40) am Rohr (12) angebracht ist und eine Flanschabdeckung (59) auf dem Flansch (14, 16) angebracht ist; und weiter eine Flanschabdeckung (59) umfassend, die ein Flansch-Isoliermaterial (80) umfasst, welches mit dem Isoliermaterial (42) der Heizvorrichtung identisch oder von ihm verschieden ist, und wobei die Flanschabdeckung (59) weiter ein sekundäres Heizglied (44) umfasst, das in dem Isoliermaterial (80) angebracht und ausgebildet ist, um den Flansch (14, 16) zu erwärmen.

5. Der wärmeisolierte Schmelzprozessor gemäß einem beliebigen der obigen Ansprüche, wobei der Zylinder(ßß) (10) Folgendes umfasst:
eine Vielzahl von Zylinderabschnitten(ßß) (19), wobei jeder Zylinderabschnitt(ßß) (19) Folgendes umfasst:
ein Rohr (12) und
ein Paar von Flanschen (18), die durch das Rohr (12) getrennt und an einem gegenüberliegenden Ende des Rohrs (12) angebracht sind,
wobei die Zylinderabschnitte(ßß) (19) so angeordnet sind, dass die Flansche (14, 16) benachbarter Zylinderabschnitte(ßß) (19) in Kontakt miteinander stehen, und
eine Vielzahl der Heizvorrichtungen (40) so am Zylinder(ßß) (10) angebracht ist, dass eine Heizvorrichtung (40) sich am Rohr (12) zwischen dem Paar von Flanschen (18) jedes Zylinderabschnitts(ßß) (19) befindet und eine Flanschabdeckung (59) auf den Flanschen (14, 16) benachbarter Zylinderabschnitte(ßß) (19) angebracht ist.

6. Der wärmeisolierte Schmelzprozessor gemäß einem beliebigen der obigen Ansprüche, wobei der Zylinder(ßß) (10) Folgendes umfasst:
ein Rohr (12);
eine im Rohr (12) angebrachte Bohrung, die sich entlang einer Länge des Rohrs (12) erstreckt, und
ein Schraubenglied (108), das in der Bohrung angebracht und ausgebildet ist, um eine Kraft auf ein Polymer auszuüben.

7. Der wärmeisolierte Schmelzprozessor gemäß einem beliebigen der obigen Ansprüche, wobei die Heizvorrichtung (10) ausgebildet ist, um entlang einer Länge des wärmeisolierten Schmelzprozessors eine isotherme Temperatur zu erzeugen.

8. Der wärmeisolierte Schmelzprozessor gemäß einem beliebigen der obigen Ansprüche, wobei ein Unterschied in einer Temperatur an der Oberfläche des Zylinders(ßß) (10) und einer Temperatur an einer äußeren Oberfläche (48) der Heizvorrichtung (40) mindestens 300°C beträgt und wobei eine Temperatur einer äußeren Oberfläche (48) der Heizvorrichtung (40) höchstens 130°C beträgt, wenn der Zylinder(ßß) (10) eine Temperatur hat, die wirksam ist, um ein Polymer einer Schmelzverarbeitung zu unterziehen, das ein Polyolefin, ein Polycarbonat oder eine Kombination umfasst, welche mindestens eines der zuvor genannten Polymere umfasst.

9. Ein System zur Schmelzverarbeitung eines Polymers, wobei das System Folgendes umfasst:
den wärmeisolierten Schmelzprozessor gemäß einem beliebigen der obigen Ansprüche und
eine Steuerung (102), die elektrisch mit dem Heizglied (44) verbunden ist;
wobei die Steuerung (102) konfiguriert ist, um dem Heizglied (44) Strom zuzuführen, wobei die Steuerung (102) elektrisch mit einem Temperatursensor (104) verbunden ist, der am Zylinder(ßß) (10) angebracht ist, und
wobei die Steuerung (102) konfiguriert ist, um das Heizglied (44) auf eine gewählte Temperatur zu erhitzen, basierend auf der Temperatur des Zylinders(ßß) (10), und wobei die Steuerung (102) elektrisch mit einem sekundären Temperatursensor (106) verbunden ist; der sekundäre Temperatursensor (106) ist ausgebildet, um eine Temperatur einer äußeren Oberfläche (48) der Heizvorrichtung (40) zu erfassen.

10. Ein Verfahren zur Verringerung des Stromverbrauchs während der Schmelzverarbeitung eines Polymers, wobei das Verfahren Folgendes umfasst:
die Verarbeitung eines Polymers in dem wärmeisolierten Schmelzprozessor gemäß einem beliebigen der Ansprüche 1-8,
wobei der wärmeisolierte Schmelzprozessor weiter ein Schraubenglied (108) umfasst, das in dem Zylinder(ßß) (10) angeordnet ist;
das Leiten eines elektrischen Stroms durch das Heizglied (44), um den Zylinder(ßß) (10) zu erhitzen;
das Ausüben einer Kraft auf das Polymer durch Drehen des Schraubengliedes (108) und
das Schmelzen des Polymers,
wobei eine Effizienz des Erhitzens des Zylinders(ßß) (10) durch den elektrischen Strom, der durch das Heizglied (44) geleitet wird, mindestens 70%, basierend auf der Menge an elektrischem Strom, der durch das Heizglied (44) strömt und erforderlich ist, um eine Temperatur zu erreichen, die wirksam ist, um das Polymer zu schmelzen, beträgt; und
wobei das Polymer ein Polyolefin, ein Polycarbonat oder eine Kombination umfasst, die mindestens eines der zuvor genannten Polymere umfasst.

## Revendications

1. Système de traitement par fusion isolé thermiquement, comprenant :
un cylindre (10) comprenant des sections de cylindre ; et
un réchauffeur (40) en contact direct avec le cylindre (10) de sorte qu'un espace soit absent entre le réchauffeur (40) et le cylindre (10), dans lequel le réchauffeur comprend :
un matériau isolant (42) en contact avec une surface du cylindre (10), et dans lequel le matériau isolant autour de chaque section de cylindre comprend un seul morceau d'isolation, joint à celle-ci en un seul point ; et
**caractérisé en ce qu'**un élément chauffant (44) est disposé dans le matériau isolant (42) et est configuré pour fournir
de la chaleur en réponse à la conduction d'un courant électrique dans l'élément chauffant (44),
dans lequel l'élément chauffant (44) comprend un élément chauffant à fil, dans lequel l'élément chauffant à fil possède un diamètre de 0,5 à 4 mm, et, lorsqu'il est installé sur le cylindre (10), l'élément chauffant à fil se trouve à 10 mm ou moins d'une surface du cylindre (10), et dans lequel l'élément chauffant à fil est formé comme une bobine plate, dans lequel la bobine plate est en forme d'onde sinusoïdale, et dans lequel l'amplitude de l'onde sinusoïdale est égale à au moins 10 fois le diamètre de l'élément chauffant à fil.

2. Système de traitement par fusion isolé thermiquement selon la revendication 1, dans lequel le réchauffeur (40) utilise 6000 Watts de puissance ou moins.

3. Système de traitement par fusion isolé thermiquement selon l'une quelconque des revendications précédentes, dans lequel le réchauffeur (40) comprend en outre une couche externe (49) qui forme une barrière d'eau, dans lequel la couche externe (49) comprend un métal, un silicone, une résine thermodurcissable, ou une combinaison comprenant au moins l'un de ce qui précède.

4. Système de traitement par fusion isolé thermiquement selon l'une quelconque des revendications précédentes, dans lequel le cylindre (10) comprend une bride (14, 16) disposée à une extrémité d'un tube (12), dans lequel le réchauffeur (40) est disposé sur le tube (12), et un couvercle de bride (59) est disposé sur la bride (14, 16), et comprenant en outre un matériau d'isolation de bride (80) qui est identique ou différent du matériau d'isolation (42) du réchauffeur, et dans lequel le couvercle de bride (59) comprend en outre un élément chauffant secondaire (44) disposé dans le matériau d'isolation (80), et configuré pour chauffer la bride (14, 16).

5. Système de traitement par fusion isolé thermiquement selon l'une quelconque des revendications précédentes, dans lequel le cylindre (10) comprend :
une pluralité de sections de cylindre (19), chaque section de cylindre (19) comprenant :
un tube (12) ; et
une paire de brides (18) séparées par le tube (12) et fixées au niveau d'une extrémité opposée du tube (12),
dans lequel les sections de cylindre (19) sont disposées de sorte que les brides (14, 16) des sections de cylindre adjacentes (19) soient en contact les unes avec les autres, et
plusieurs réchauffeurs (40) sont disposés sur le cylindre (10) de sorte qu'un réchauffeur (40) soit disposé sur
le tube (12) entre la paire de brides (18) de chaque section de cylindre (19), et un couvercle de bride (59) est disposé sur les brides (14, 16) des sections de cylindre adjacentes (19).

6. Système de traitement par fusion isolé thermiquement selon l'une quelconque des revendications précédentes, dans lequel le cylindre (10) comprend :
un tube (12) ;
un alésage disposé dans le tube (12) et qui s'étend le long d'une longueur du tube (12) ; et
un élément de vis (108) disposé dans l'alésage et configuré pour exercer une force sur un polymère.

7. Système de traitement par fusion isolé thermiquement selon l'une quelconque des revendications précédentes, dans lequel le réchauffeur (10) est configuré pour produire une température isotherme le long d'une longueur du système de traitement par fusion isolé thermiquement.

8. Système de traitement par fusion isolé thermiquement selon l'une quelconque des revendications précédentes, dans lequel une différence entre une température à la surface du cylindre (10) et une température au niveau d'une surface extérieure (48) du réchauffeur (40) est supérieure ou égale à 300°C, et dans lequel une température d'une surface extérieure (48) du réchauffeur (40) est inférieure ou égale à 130°C lorsque le cylindre (10) présente une température efficace pour faire fondre un polymère comprenant un polyoléfine, un polycarbonate, ou une combinaison comprenant au moins l'un des polymères susmentionnés.

9. Système de traitement par fusion d'un polymère, le système comprenant :
le système de traitement par fusion isolé thermiquement selon l'une quelconque des revendications précédentes ; et
un contrôleur (102) relié électriquement à l'élément chauffant (44) ;
dans lequel le contrôleur (102) est configuré pour fournir du courant à l'élément chauffant (44), dans lequel le contrôleur (102) est relié électriquement à un capteur de température (104) disposé sur le cylindre (10),
et
dans lequel le contrôleur (102) est configuré pour chauffer l'élément chauffant (44) à une température sélectionnée, sur la base
de la température du cylindre (10), et dans lequel le contrôleur (102) est relié électriquement à un capteur de température secondaire (106), le capteur de température secondaire (106) étant configuré pour détecter une température d'une surface externe (48) du réchauffeur (40).

10. Processus de réduction de la consommation d'énergie pendant le traitement par fusion d'un polymère, le processus comprenant :
le traitement d'un polymère dans le système de traitement par fusion isolé thermiquement selon l'une quelconque des revendications 1 à 8, dans lequel le système de traitement par fusion isolé thermiquement comprend en outre un élément de vis (108) disposé dans le cylindre (10) ;
la circulation d'un courant électrique dans l'élément chauffant (44) afin de chauffer le cylindre (10) ;
l'application d'une force sur le polymère en tournant l'élément à vis (108) ; et
la fusion du polymère,
dans lequel une efficacité de chauffage du cylindre (10) à l'aide du courant électrique qui circule dans l'élément chauffant (44) est supérieure ou égale à 70%, sur la base de la quantité de courant électrique qui passe par l'élément chauffant (44) et nécessaire pour atteindre une température qui permet de faire fondre le polymère ; et
dans lequel le polymère comprend un polyoléfine, un polycarbonate, ou une combinaison comprenant au moins l'un des polymères susmentionnés.
